# EUROPEAN PATENT APPLICATION

(11) **EP 4 694 542 A1**
(43) Date of publication of application: **11.02.2026**
(21) Application number: 24778126.3
(22) Date of filing: 28.03.2024
(51) Int. Cl.: H04W 76/10

(54) **SELF-PROPELLED DEVICE COMMUNICATION SYSTEM, CHARGING BASE OF SELF-PROPELLED DEVICE, AND SELF-PROPELLED DEVICE**

(30) Priority: 31.03.2023 CN 202320695834 U
(71) Applicant: Suzhou Cleva Precision Machinery & Technology Co., Ltd., Suzhou, Jiangsu 215000 (CN)
(72) Inventor: CHEN, Hong, Suzhou, Jiangsu 215000 (CN); CHEN, Fei, Suzhou, Jiangsu 215000 (CN); CHEN, Zeng, Suzhou, Jiangsu 215000 (CN)
(74) Representative: Murgitroyd & Company
(86) International application number: PCT/CN2024/084356
(87) International publication number: WO 2024/199340

(57) **Abstract**

The present disclosure relates to a self-propelled device, a communication system for the self-propelled device and a charging dock for the self-propelled device. The system includes: a communication gateway, a control terminal, and a controlled terminal; the communication gateway includes a Wi-Fi module and a Bluetooth module; the Wi-Fi module is configured to connect to an ambient network; the Wi-Fi module and the Bluetooth module are connected to exchange data. The communication gateway is respectively connected to the control terminal and the controlled terminal, realizing establishment of the communication system and facilitating data exchange between the control terminal and the controlled terminal. Through connection of the Wi-Fi module to the ambient network and the data exchange between the Wi-Fi module and the Bluetooth module, the problem of difficult network connection for remotely located devices is solved, the convenience of data exchange is improved, and user control over remotely located devices is enhanced.

## Description

### TECHNICAL FIELD

The present disclosure relates to the communication technology, in particular to a self-propelled device, a communication system for the self-propelled device and a charging dock for the self-propelled device.

### BACKGROUND

As living standards continually improve, there is a growing demand for high-quality leisure environments. Parks, sports fields, and similar areas have become popular venues for recreation and entertainment. To preserve the aesthetic appearance of these areas, grass must be regularly trimmed. Currently, self-propelled devices such as robotic lawn mowers are commonly employed to perform trimming tasks that were previously done manually.

Currently, the charging dock for a robotic lawn mower is capable of charging the mower. The robotic lawn mower can receive operational commands via a wireless network. It can connect to the Internet using an internal 4G module, which allows for control through a mobile application. However, Internet access via the 4G module incurs significant costs, making this approach economically disadvantageous. Alternatively, the robotic lawn mower may use an internal Wi-Fi module to connect to the Internet. Nevertheless, when it operates beyond the range of the home Wi-Fi network, it cannot maintain a stable connection, resulting in unreliable operation. Therefore, a convenient communication system for a self-propelled device, which is unaffected by distance limitations, has become an urgent problem that needs to be solved.

### SUMMARY

The present disclosure provides a self-propelled device, a communication system for the self-propelled device and a charging dock for the self-propelled device, aiming to solve the problem of difficulty in establishing network connections for remotely located devices and to improve the convenience of data exchange.

According to one aspect of the present disclosure, a communication system for a self-propelled device is provided, where the system includes: a communication gateway, a control terminal, and a controlled terminal; the communication gateway is respectively connected to the control terminal and the controlled terminal, and the control terminal is network-connected to the controlled terminal via the communication gateway; the communication gateway includes a Wi-Fi module and a Bluetooth module; the Wi-Fi module is configured to connect to an ambient network; the Wi-Fi module and the Bluetooth module are connected to exchange data.

In one embodiment, the communication gateway is disposed in at least one of the following: inside a charging dock for a self-propelled device, outside the charging dock for a self-propelled device, or independently at the periphery of the charging dock for a self-propelled device.

In one embodiment, the controlled terminal is provided with a Bluetooth communication interface that is configured internally within the controlled terminal, the Bluetooth communication interface is configured to enable the remotely located controlled terminal to establish a connection with the communication gateway.

In one embodiment, the communication gateway is configured by the control terminal to connect to the ambient network.

In one embodiment, the control terminal is configured to establish a communication connection between the controlled terminal and the communication gateway based on a connection request sent by the controlled terminal, thereby enabling the communication gateway and the controlled terminal to exchange data.

In one embodiment, the control terminal includes at least one of: a smart terminal or a remote-control terminal;
The controlled terminal includes at least one of: a self-propelled device, a lighting system, or an irrigation system.

In one embodiment, the communication gateway further includes:
a network configuration button connected to the Bluetooth module and configured to cause the communication gateway to enter a network configuration state;
a network configuration indicator connected to the Bluetooth module and configured to indicate the network configuration state of the communication gateway.

In one embodiment, the communication gateway further includes:
a network indicator connected to the Wi-Fi module and configured to indicate whether the Wi-Fi module is connected to the ambient network;
a reset module connected to the Bluetooth module and configured to enable the Bluetooth module to control resetting of the Wi-Fi module.

According to another aspect of the present disclosure, a charging dock for a self-propelled device is provided, the charging dock for a self-propelled device includes: a communication gateway respectively connected to a control terminal and the self-propelled device, the control terminal is network-connected to the self-propelled device via the communication gateway; the communication gateway includes a Wi-Fi module and a Bluetooth module; the Wi-Fi module is configured to connect to an ambient network; the Wi-Fi module and the Bluetooth module are connected to exchange data.

According to another aspect of the present disclosure, a self-propelled device is provided, the self-propelled device is network-connected to the control terminal via the communication gateway of the charging dock for a self-propelled device.

In the technical solution of the embodiment of the present disclosure, the communication gateway is respectively connected to the control terminal and the controlled terminal, realizing the establishment of the communication system for a self-propelled device and facilitating data exchange between the control terminal and the controlled terminal. Through the connection of the Wi-Fi module to the ambient network and the data exchange between the Wi-Fi module and the Bluetooth module, the problem of difficult network connection for remotely located devices is solved, the convenience of data exchange is improved, and user control over remotely located devices is enhanced.

It should be understood that the content described in this section is not intended to identify key or important features of embodiments of the present disclosure, nor is it intended to limit the scope of the present disclosure. Other features of the present disclosure will be easily understood through the following description.

### BRIEF DESCRIPTION OF THE DRAWINGS

In order to illustrate the technical solutions of the embodiments of the present disclosure more clearly, the accompanying drawings required for use in the embodiments will be introduced briefly below. It should be understood that the following drawings show only some embodiments of the present disclosure and therefore should not be regarded as limiting the scope, and other relevant drawings can be derived based on the accompanying drawings by those of ordinary skill in the art without any creative efforts.
FIG. 1 is a schematic structural diagram of a communication system for a self-propelled device according to the present disclosure;
FIG. 2 is a schematic structural diagram of a communication gateway according to the present disclosure;
FIG. 3 is a circuit diagram of a communication gateway according to the present disclosure;
FIG. 4 is a simplified diagram of a communication system for a self-propelled device according to the present disclosure;
FIG. 5 is a schematic diagram of an extended configuration of a communication system for a self-propelled device according to the present disclosure;
FIG. 6 is a topological structure diagram of a communication system for a self-propelled device according to the present disclosure;
FIG. 7 is a schematic structural diagram of a charging dock for a self-propelled device according to the present disclosure.

### DETAILED DESCRIPTION OF THE EMBODIMENTS

In order to make those skilled in the art understand the solutions of the present disclosure better, the following will clearly and completely describe the technical solutions in the embodiments of the present disclosure with reference to the accompanying drawings in the embodiments of the present disclosure. Apparently, the described embodiments are merely some rather than all of the embodiments of the present disclosure. Based on the embodiments in the present disclosure, all other embodiments obtained by those of ordinary skill in the art without any creative efforts shall fall within the scope of protection of the present disclosure.

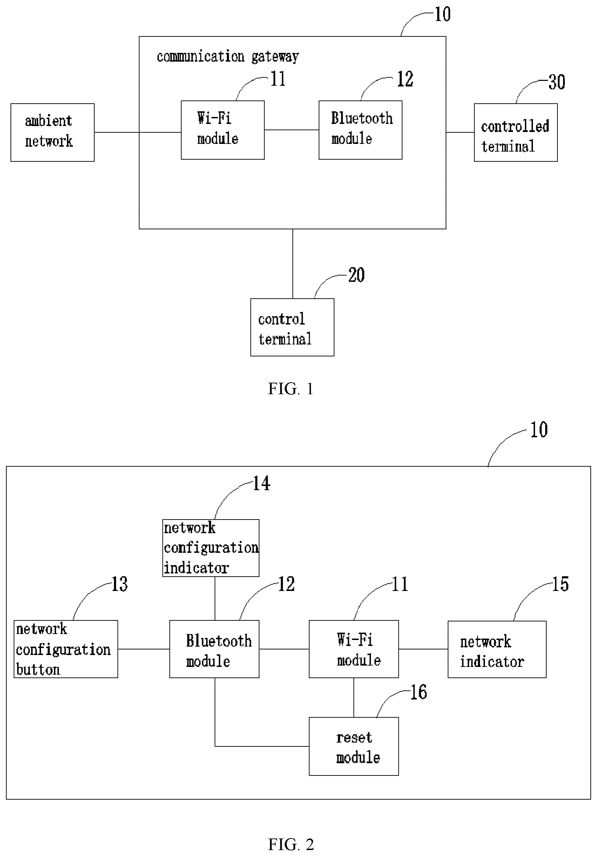

In one embodiment, FIG. 1 is a schematic structural diagram of a communication system for a self-propelled device according to the present disclosure. This embodiment is applicable to scenarios involving data exchange among a control terminal, a communication gateway, and a controlled terminal. As shown in FIG. 1, the communication system for a self-propelled device includes: a communication gateway 10, a control terminal 20, and a controlled terminal 30. The communication gateway 10 is respectively connected to the control terminal 20 and the controlled terminal 30, and the control terminal 20 is network-connected to the controlled terminal 30 via the communication gateway 10.

The communication gateway 10 includes a Wi-Fi module 11 and a Bluetooth module 12.

The Wi-Fi module 11 is connected to an ambient network.

The Wi-Fi module 11 and the Bluetooth module 12 are connected to exchange data.

To exchange data between the Wi-Fi module 11 and the Bluetooth module 12 within the communication gateway 10, the Wi-Fi module 11 and the Bluetooth module 12 may be connected via a hardware interface. In practical operation, the hardware interface may include, but is not limited to, a serial interface, provided that normal data transmission between the Wi-Fi module 11 and the Bluetooth module 12 is ensured. In one embodiment, a communication protocol conversion unit may also be integrated into the Wi-Fi module 11 and the Bluetooth module 12 to ensure conversion of data communication protocols during data transmission between the Wi-Fi module 11 and the Bluetooth module 12.

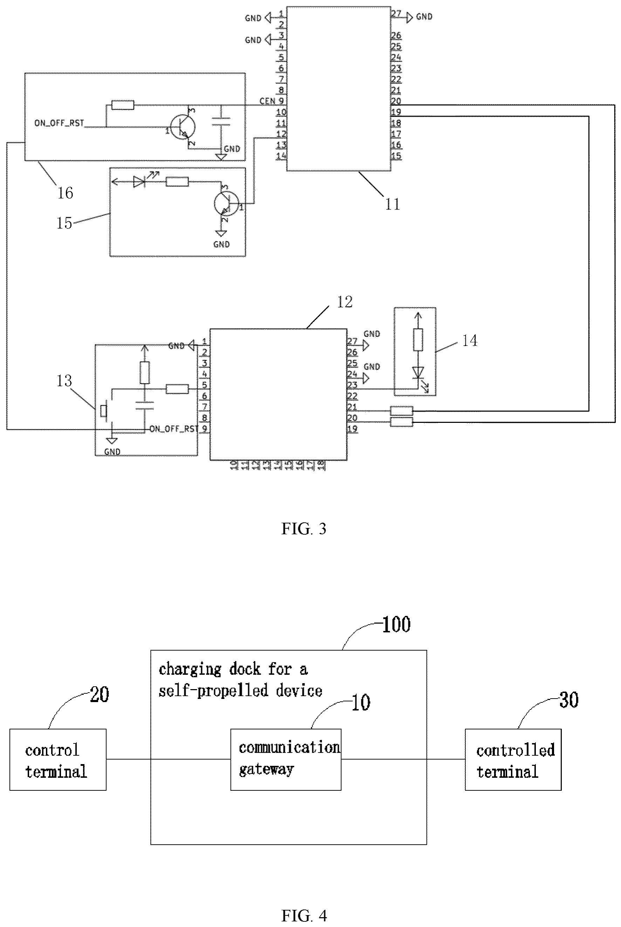

In a practical connection, as shown in FIG. 3, pin 20 of the Wi-Fi module 11 may be connected to pin 20 of the Bluetooth module 12 for the Wi-Fi module 11 to receive data from the Bluetooth module 12. Pin 19 of the Wi-Fi module 11 may be connected to pin 21 of the Bluetooth module 12 for the Bluetooth module 12 to receive data from the Wi-Fi module 11. In this embodiment, the communication gateway 10 is respectively connected to the control terminal 20 and the controlled terminal 30. Connections among the communication gateway 10, the control terminal 20, and controlled terminal 30 are configured for data transmission. In another embodiment, the communication gateway 10, the control terminal 20, and the controlled terminal 30 may also be connected via a wireless mesh network.

The control terminal 20 is connected to the communication gateway 10 and is configured to establish a connection between the communication gateway 10 and the controlled terminal 30, as well as to configure the communication gateway 10 to access the ambient network.

In one embodiment, when a user requires the communication gateway 10 to connect to the ambient network, the control terminal 20 may be used to configure the communication gateway 10 for network access. Specifically, the control terminal 20 may connect to the communication gateway 10 via a Bluetooth communication interface and configure the communication gateway 10 to connect to the ambient network. In practical operation, when the communication gateway 10 needs to connect to the ambient network, it may send a network configuration signal to the control terminal 20. Upon receiving the network configuration signal from the communication gateway 10, the control terminal 20 may configure the communication gateway 10 to connect to the ambient network. The communication gateway 10 then connects to the ambient network via its Wi-Fi module 11. In one embodiment, the ambient network may include a Wi-Fi signal emitted by a home router. When the user requires the communication gateway 10 to connect to the controlled terminal 30, the control terminal 20 may be used to connect to the communication gateway 10 and configure the communication gateway 10 to connect to the controlled terminal 30. In practical operation, the controlled terminal 30 may send a connection request to the control terminal 20. Upon receiving the connection request, the control terminal 20 may configure the communication gateway 10 to establish a communication connection with the controlled terminal 30 based on the connection request signal.

In the present disclosure, the communication gateway is respectively connected to the control terminal and the controlled terminal, realizing the establishment of the communication system for a self-propelled device and facilitating data exchange between the control terminal and the controlled terminal. Through the connection of the Wi-Fi module to the ambient network and the data exchange between the Wi-Fi module and the Bluetooth module, the problem of difficult network connection for remotely located devices is solved, and the convenience of data exchange is improved.

In one embodiment, FIG. 2 is a schematic structural diagram of a communication gateway according to the present disclosure. Based on the foregoing embodiments, the structure of the communication gateway 10 is further refined in this embodiment. As shown in FIG. 2, the communication gateway 10 of this embodiment further includes: a network configuration button 13, a network configuration indicator 14, a network indicator 15, and a reset module 16.

The network configuration button 13 is connected to the Bluetooth module 12 and is configured to cause the communication gateway 10 into a network configuration state.

The network configuration indicator 14 is connected to the Bluetooth module 12 and is configured to indicate the network configuration state of the communication gateway 10.

The network indicator 15 is connected to the Wi-Fi module 11 and is configured to indicate whether the Wi-Fi module 11 is connected to the ambient network.

The reset module 16 is connected to the Bluetooth module 12 and is configured to enable the Bluetooth module 12 to control the resetting the Wi-Fi module 11.

Specifically, the network configuration button 13 is connected to the Bluetooth module 12. When the network configuration button 13 is pressed, the communication gateway 10 is placed into the network configuration state. The network configuration indicator 14 is connected to the Bluetooth module 12 and is configured to indicate whether the communication gateway 10 is in the network configuration state. In practical operation, the type of the network configuration indicator 14 is not limited, similar to the network indicator 15. In one embodiment, the network configuration indicator 14 and the network indicator 15 may be the same physical indicator, provided that it displays in different modes to correspond to different operational states of the communication gateway 10.

The network indicator 15 is connected to the Wi-Fi module 11 and is configured to indicate the connection status of the Wi-Fi module 11. In practical operation, the type of the network indicator 15 is not limited, provided that it provides distinct visual indications when the Wi-Fi module 11 is connected to and disconnected from the ambient network. By way of example, the network indicator 15 may: display different colors before and after the Wi-Fi module 11 establishes connection with the ambient network; remain steadily illuminated when the Wi-Fi module 11 is connected to the ambient network and flash when the Wi-Fi module 11 is disconnected from the ambient network; or change its flashing frequency in response to a change in the connection status.

The reset module 16 is connected to the Bluetooth module 12. If the Wi-Fi module 11 fails to operate normally, the Wi-Fi module 11 needs to be reset. During operation, in the event that the Wi-Fi module 11 experiences a crash or undergoes parameter modification, a reset operation may be initiated through the Bluetooth module 12 to restore the Wi-Fi module 11 to normal operation. When the Wi-Fi module 11 fails to operate normally, the Bluetooth module 12 is unable to transmit data to the Wi-Fi module 11. At which point, the Bluetooth module 12 can trigger the reset module 16 to perform a reset of the Wi-Fi module 11.

In practical operation, when performing the network configuration process for the communication gateway 10, the user may press the network configuration button 13 to place the communication gateway 10 into the network configuration state, with the network configuration indicator 14 displaying the network configuration state. A smart terminal can acquire information from the communication gateway 10 in the network configuration state and configure the network for the communication gateway 10 based on this information. Upon successful network configuration of the communication gateway 10, the network configuration indicator 14 displays a network configuration state, while the network indicator 15 switches to a network-connected state. In practical operation, the network configuration indicator 14 typically remains steadily illuminated and enters a slow-flashing state during network configuration; whereas the network indicator 15 is normally off (non-flashing) by default and remains steadily illuminated after successful network configuration.

The present disclosure prevents operational failures of the Wi-Fi module, such as crashes, through the reset module; enables visual monitoring of the operating status of the communication gateway through the network indicator and the network configuration indicator; and facilitates the communication gateway's entry into the network configuration state through the network configuration button.

In one embodiment, FIG. 3 is a circuit diagram of a communication gateway of the present disclosure. This embodiment provides specific details regarding the internal circuit connections of the communication gateway 10, building upon the foregoing embodiments.

Specifically, a pin 20 of the Wi-Fi module 11 is connected to a pin 20 of the Bluetooth module 12 for the Wi-Fi module 11 to receive data transmitted by the Bluetooth module 12; a pin 19 of the Wi-Fi module 11 is connected to a pin 21 of the Bluetooth module 12 for the Bluetooth module 12 to receive data transmitted by the Wi-Fi module 11; the network configuration button 13 is connected to a pin 5 of the Bluetooth module 12; the network configuration indicator 14 is connected to a pin 23 of the Bluetooth module 12; the network indicator 15 is connected to a pin 12 of the Wi-Fi module 11; the reset module 16 is connected to a pin 9 of the Wi-Fi module 11 and a pin 9 of the Bluetooth module 12, enabling the Bluetooth module 12 to control the reset of the Wi-Fi module 11 via the reset module 16.

In one embodiment, the communication gateway is disposed in at least one of the following: inside a charging dock for a self-propelled device, outside the charging dock for a self-propelled device, or independently at the periphery of the charging dock for a self-propelled device. FIG. 4 is a simplified diagram of the communication system for a self-propelled device of the present disclosure. This embodiment further illustrates the system by way of example where the communication gateway 10 is disposed inside the charging dock 100 for a self-propelled device.

The charging dock 100 for a self-propelled device is configured to charge the self-propelled device and assist the control terminal 20 (including the smart terminal) in acquiring operational data from the controlled terminal 30 (including the self-propelled device).

In one embodiment, the communication gateway 10 is disposed in at least one of the following: inside the charging dock 100 for a self-propelled device, outside the charging dock 100 for a self-propelled device, or independently at the periphery of the charging dock 100 for a self-propelled device.

Specifically, the communication gateway 10 can be located inside, outside, or peripherally independent of the charging dock for a self-propelled device. The charging dock 100 for a self-propelled device can communicate with the control terminal 20 and the controlled terminal 30 via the communication gateway 10.

In practical operation, to prevent wear and failure, the communication gateway 10 may be disposed inside the charging dock 100 for a self-propelled device. For physical connectivity, the communication gateway 10 may be connected to the charging dock 100 for a self-propelled device via wired means, electrical coupling, or may be independently at the periphery of the charging dock 100 for a self-propelled device.

Specifically, by installing the communication gateway 10 inside the charging dock 100 for a self-propelled device, the charging dock is equipped with data conversion functionality. As the self-propelled device may operate away from the ambient network (such as a home router) during tasks, the controlled terminal 30 (such as the self-propelled device) might be unable to receive data from the control terminal 20 (such as the smart terminal). The charging dock 100, being positioned where power is available, can continuously receive the ambient network without needing an independent power source for the communication gateway 10. For example, the ambient network may include Wi-Fi signals from a home router. The controlled terminal 30 (such as the self-propelled device) can be provided with a Bluetooth communication interface, allowing it to establish a communication connection with the Bluetooth module 12 within the communication gateway 10 inside the charging dock 100. When the control terminal 20 (such as the smart terminal) issues an operation command, the communication gateway 10 can receive the operation command and transmit it to the controlled terminal 30 (such as the self-propelled device) via the Bluetooth module 12, causing the self-propelled device to perform tasks.

Specifically, the charging dock 100 for a self-propelled device is respectively connected to the control terminal 20 and the controlled terminal 30. The charging dock 100 for a self-propelled device may perform data exchange with the control terminal 20 and the controlled terminal 30 via the communication gateway 10, that is, the charging dock 100 for a self-propelled device may communicate with the control terminal 20 and the controlled terminal 30 via the communication gateway 10.

In one embodiment, when a user requires the charging dock 100 for a self-propelled device to connect to the ambient network, the control terminal 20 may be used to connect the charging dock 100 to the ambient network. In practical operation, when the communication gateway 10 needs to connect to the ambient network, it may send a network configuration signal to the smart terminal. Upon receiving the network configuration signal from the communication gateway 10, the smart terminal may configure the communication gateway 10 to connect to the ambient network. The ambient network may include a Wi-Fi signal emitted by the home router. When the user requires the communication gateway 10 to connect to the self-propelled device, the smart terminal may be used to connect to the communication gateway 10 and configure the communication gateway 10 to connect to the self-propelled device.

In the present disclosure, the charging dock for a self-propelled device is respectively connected to the smart terminal and the self-propelled device, the charging dock for a self-propelled device performs data exchange with the smart terminal and the self-propelled device through the communication gateway, thereby realizing the establishment of the communication system for a self-propelled device, facilitating data exchange between the smart terminal and the self-propelled device, and improving the user experience.

In one embodiment, the control terminal 20 includes a smart terminal and a remote-control terminal; the controlled terminal 30 includes execution devices such as a self-propelled device, a lighting system, and an irrigation system.

The smart terminal may include PC (Personal Computer) terminals and mobile terminals. For example, the smart terminal may include, but is not limited to, computers and mobile phones. The self-propelled device may include devices such as robotic lawn mowers that can move autonomously. The lighting system may perform lighting operations based on control instructions, and the irrigation system may perform irrigation operations in scenarios such as gardens and lawns based on control instructions.

In one embodiment, the control terminal 20 establishes a communication connection between the controlled terminal 30 and the communication gateway 10 based on a connection request sent by the controlled terminal 30, enabling data exchange between the communication gateway 10 and the controlled terminal 30.

Specifically, the Bluetooth module 12 of the communication gateway 10 is configured to connect with the controlled terminal 30. To establish the communication connection between the communication gateway 10 and the controlled terminal 30, the controlled terminal 30 may be provided with a Bluetooth communication interface that is configured internally within the controlled terminal 30. When the controlled terminal 30 is provided with the Bluetooth communication interface that is configured internally within the controlled terminal, the controlled terminal 30 can establish the communication connection with the Bluetooth module 12 within the communication gateway 10 via the Bluetooth communication interface. In practical operation, the control terminal 20 can be used to establish the communication connection between the communication gateway 10 and the controlled terminal 30. The controlled terminal 30 can establish the communication connection with the control terminal 20 through the Bluetooth module and send connection request to the control terminal 20. Based on this connection request, the control terminal 20 can then establish the communication connection between the communication gateway 10 and the controlled terminal 30.

Furthermore, the communication gateway 10 is further configured to send operational information to the control terminal 20 upon obtaining it from the controlled terminal 30.

The operational information may refer to information of the controlled terminal 30 during its working operation. The operational information may include, but is not limited to, the operational status and operational parameters of the controlled terminal 30. Exemplarily, the operational status may include the work route, work state, etc., and the operational parameters may include the remaining power of the controlled terminal 30 and whether any anomalies have occurred.

Specifically, the communication gateway 10 can obtain the operational information from the controlled terminal 30 via its Bluetooth module 12. In practical operation, the method by which the communication gateway 10 obtains the operational information is not limited. Exemplarily, the controlled terminal 30 may actively send its operational information to the communication gateway 10; alternatively, the communication gateway 10 may proactively collect this operational information from the controlled terminal 30.

Herein, the controlled terminal 30 may transmit the operational information at preset intervals. The communication gateway 10 may collect for the operational information from the controlled terminal 30 upon receiving a data collection instruction, or it may also collect for the operational information according to its own preset intervals. Once the communication gateway 10 obtains the operational information from the controlled terminal 30, it can send the operational information to the control terminal 20. As the communication gateway 10 and the control terminal 20 can communicate via the Bluetooth module 12, when communication gateway 10 is connected to the control terminal 20 through the Bluetooth module 12, the communication gateway 10 can transmit the obtained operational information of the controlled terminal 30 to the control terminal 20 through its Bluetooth module 12.

In one embodiment, the communication gateway 10 is configured to connect to the ambient network based on configuration by the control terminal 20.

Specifically, the communication gateway 10 may connect to the ambient network via the control terminal 20 to complete initial network configuration. The communication gateway 10 may establish the communication connection with the control terminal 20 via the Bluetooth module 12. After establishing the communication connection with the control terminal 20, the communication gateway 10 may send a configuration signal to the control terminal 20. The control terminal 20, which is connected to the ambient network, receives the configuration signal and subsequently configures the communication gateway 10 to connect to the ambient network.

Specifically, when the control terminal 20 is a smartphone, a pre-installed application (APP) on it can be used to configure the ambient network for the communication gateway 10 once a connection is established between them. In practical operation, the user can scan for configurable communication gateways 10 in the surrounding environment using the APP, select the target communication gateway 10 from the list, and configure the ambient network for it. In one embodiment, the ambient network for the communication gateway 10 can be configured in multiple ways. For example, the user may select the specific communication gateway 10 in the APP and enter the Wi-Fi service set identifier (SSID) and password to complete the ambient network configuration.

In one embodiment, the control terminal 20 establishes the communication connection between the controlled terminal 30 and the communication gateway 10 in response to the connection request sent by the controlled terminal 30, thereby enabling data exchange between the communication gateway 10 and the controlled terminal 30.

Specifically, the control terminal 20 can establish the communication connection with the controlled terminal 30 via the Bluetooth module 12. The controlled terminal 30 may send the connection request to the control terminal 20. Based on this connection request, the control terminal 20 can establish the communication connection between the controlled terminal 30 and the communication gateway 10. When the control terminal 20 is the smartphone and the controlled terminal 30 is the robotic lawn mower, the robotic lawn mower can send the connection request to the smartphone through its Bluetooth communication interface. The smartphone can receive the connection request tin the APP and, based on the received request, connect the robotic lawn mower to the communication gateway 10.

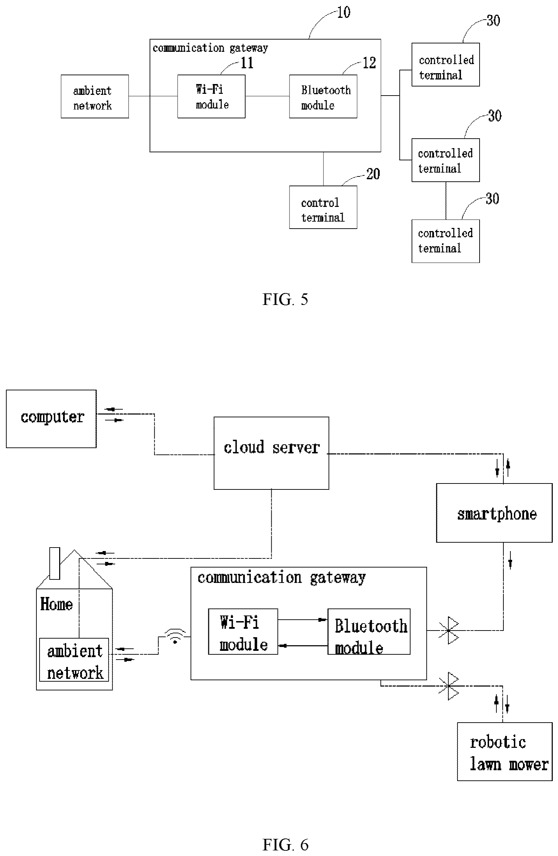

In one embodiment, FIG. 5 is a schematic diagram of an extended configuration of the communication system for a self-propelled device according to the present disclosure. This embodiment addresses scenarios where the controlled terminal 30 cannot directly connect to the communication gateway 10 due to excessive distance.

In one embodiment, the controlled terminal 30 establishes the connection via the Bluetooth communication interface configured therein. The Bluetooth communication interface is used to enable the remotely located controlled terminal 30 to establish the connection with the communication gateway 10.

Specifically, when there are multiple controlled terminals 30, they may form a mesh network via their built-in Bluetooth communication interfaces. The communication gateway 10 and the controlled terminal 30, as well as one controlled terminal 30 and another controlled terminal 30, may freely form a mesh network. When a remotely located controlled terminal 30 cannot directly establish the communication connection with the communication gateway 10, it may connect to the communication gateway 10 via the Bluetooth communication interface of a nearby controlled terminal 30, enabling data exchange between the remotely located controlled terminal 30 and the communication gateway 10.

In the present disclosure, connectivity between remotely located controlled terminals and the communication gateway is enabled through the Bluetooth communication interfaces provided within the controlled terminals, thereby facilitating data exchange between the remotely located controlled terminals and the control terminal.

In one embodiment, FIG. 6 is a topological structure diagram of the communication system for a self-propelled device according to the present disclosure. Based on the above embodiments, this embodiment uses the smartphone or computer as the control terminal 20, the robotic lawn mower as the controlled terminal 30, and the charging dock of the robotic lawn mower as the charging dock for a self-propelled device to further explain data transmission in the communication system for a self-propelled device.

The smartphone establishes communication connection with the Bluetooth module 12 in communication gateway 10 via Bluetooth interface, thereby enabling connection between the communication gateway 10 and the robotic lawn mower, as well as between the Wi-Fi module 11 of the communication gateway 10 and the home router (i.e., ambient network). The smartphone may obtain the operational information of the robotic lawn mower collected by the communication gateway 10 through the Bluetooth interface, or download data from a cloud server. After the Bluetooth module 12 in the communication gateway 10 obtains the operational information from the robotic lawn mower, it transmits the operational information to the Wi-Fi module 11 through hardware interface. The Wi-Fi module 11 may then upload the operational information directly to the cloud server via home router (ambient network), enabling the smartphone to query such information in cloud server.

When configuring network for communication gateway 10 through the APP on the smartphone, the user may press and hold the configuration button of communication gateway 10 inside the charging dock of the robotic lawn mower to initiate network configuration mode. The user then opens the APP on the smartphone, connects to router (in application environment, e.g., home router) with Bluetooth enabled, scans for the communication gateway 10 inside the robotic lawn mower's charging dock in APP interface, selects the Bluetooth module of communication gateway 10 displayed in APP interface, enters Wi-Fi SSID and password (for home router) in APP, and waits for configuration completion. During configuration, the configuration indicator of the communication gateway 10 flashes; upon completion, the network indicator of the communication gateway 10 remains steadily illuminated.

When establishing communication connection between the communication gateway 10 and robotic lawn mower via the APP on the smartphone, the robotic lawn mower enters waiting-to-be-added state after power-on. Following APP instructions, the user may add the robotic lawn mower via the Bluetooth module, thereby completing the robotic lawn mower's connection to gateway 10.

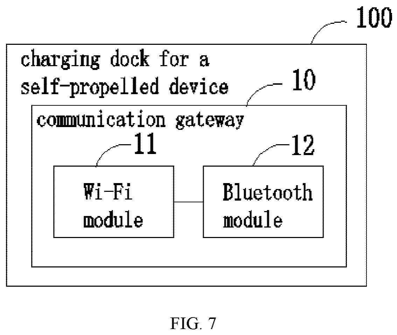

In one embodiment, FIG. 7 is a schematic structural diagram of a charging dock for a self-propelled device according to the present disclosure. Using the example where the communication gateway 10 is inside the charging dock 100 for a self-propelled device, as shown in FIG. 7, the charging dock 100 for a self-propelled device includes: a communication gateway 10. The communication gateway 10 is respectively connected to the control terminal 20 and the self-propelled device. The control terminal 20 is network-connected to the self-propelled device via the communication gateway 10.

The communication gateway 10 includes a Wi-Fi module 11 and a Bluetooth module 12.

The Wi-Fi module 11 is configured to connect to the ambient network. The Wi-Fi module 11 and the Bluetooth module 12 are connected to exchange data.

Specifically, the communication gateway 10 may be disposed inside the charging dock 100 for a self-propelled device, outside the charging dock 100 for a self-propelled device, or independently at the periphery of the charging dock 100. The charging dock 100 for a self-propelled device may communicate with the control terminal 20 and the controlled terminal 30 via the communication gateway 10. In practical connections, the communication gateway 10 and the charging dock 100 for a self-propelled device may be connected via wired means, electrical means, or the communication gateway 10 may be independently at the periphery of the charging dock for a self-propelled device.

In one embodiment, the self-propelled device is network-connected to the control terminal 20 via the communication gateway 10.

Specifically, the self-propelled device may send the connection request to the control terminal 20 to establish the communication connection between the self-propelled device and the communication gateway 10, enabling data exchange between the communication gateway 10 and the self-propelled device. Thus, the self-propelled device may be network-connected to the control terminal 20 via the communication gateway 10.

The aforementioned specific implementations do not constitute a limitation on the scope of protection of the present disclosure. Those skilled in the art should understand that various modifications, combinations, sub-combinations, and replacements may be conducted according to design requirements and other factors. Modifications, equivalent replacements, improvements, and the like made within the spirit and principle of the present disclosure shall fall within the scope of protection of the present disclosure.

## Claims

1. A communication system for a self-propelled device, comprising:
a communication gateway;
a control terminal; and
a controlled terminal;
wherein the communication gateway is respectively connected to the control terminal and the controlled terminal;
the control terminal is network-connected to the controlled terminal via the communication gateway;
the communication gateway comprises a Wi-Fi module and a Bluetooth module;
the Wi-Fi module is configured to connect to an ambient network; and
the Wi-Fi module and the Bluetooth module are connected to exchange data.

2. The communication system according to claim 1, wherein the communication gateway is disposed in at least one of the following:
inside a charging dock for a self-propelled device, outside the charging dock for a self-propelled device, or independently at a periphery of the charging dock for a self-propelled device.

3. The communication system according to claim 2, wherein the controlled terminal is provided with a Bluetooth communication interface that is configured internally within the controlled terminal, the Bluetooth communication interface is configured to enable the remotely located controlled terminal to establish a connection with the communication gateway.

4. The communication system according to claim 3, wherein the communication gateway is configured by the control terminal to connect to the ambient network.

5. The communication system according to claim 3, wherein the control terminal is configured to establish a communication connection between the controlled terminal and the communication gateway based on a connection request sent by the controlled terminal, thereby enabling the communication gateway and the controlled terminal to exchange data.

6. The communication system according to any one of claims 3-5, wherein:
the control terminal comprises at least one of: a smart terminal or a remote-control terminal;
the controlled terminal comprises at least one of: a self-propelled device, a lighting system, or an irrigation system.

7. The communication system according to claim 6, wherein the communication gateway further comprises:
a network configuration button connected to the Bluetooth module and configured to cause the communication gateway to enter a network configuration state;
a network configuration indicator connected to the Bluetooth module and configured to indicate the network configuration state of the communication gateway.

8. The communication system according to claim 6, wherein the communication gateway further comprises:
a network indicator connected to the Wi-Fi module and configured to indicate whether the Wi-Fi module is connected to the ambient network;
a reset module connected to the Bluetooth module and configured to enable the Bluetooth module to control resetting of the Wi-Fi module.

9. A charging dock for a self-propelled device, comprising:
a communication gateway respectively connected to a control terminal and the self-propelled device,
wherein the control terminal is network-connected to the self-propelled device via the communication gateway;
the communication gateway comprises a Wi-Fi module and a Bluetooth module;
the Wi-Fi module is configured to connect to an ambient network;
the Wi-Fi module and the Bluetooth module are connected to exchange data.

10. A self-propelled device, wherein the self-propelled device is network-connected to a control terminal through the communication gateway according to claim 9.
